# EUROPEAN PATENT APPLICATION

(11) **EP 4 656 113 A1**
(43) Date of publication of application: **03.12.2025**
(21) Application number: 25175173.1
(22) Date of filing: 08.05.2025
(51) Int. Cl.: A47L 9/06, A47L 11/283

(54) **SWEEPING ROBOT**

(30) Priority: 28.05.2024 CN 202421183252 U
(71) Applicant: Beijing Xiaomi Mobile Software Co., Ltd., Beijing 100085 (CN)
(72) Inventor: ZHANG, Tiantian, Beijing (CN); ZHANG, Wentao, Beijing (CN)
(74) Representative: Dehns Germany Partnerschaft mbB

(57) **Abstract**

The present invention provides a sweeping robot, which belongs to the technical field of household appliances. The sweeping robot includes a main body (1), a first cleaning mechanism (2), and a second cleaning mechanism (3). The first cleaning mechanism (2) is connected to the main body (1) and is located below the main body (1), and the first cleaning mechanism (2) is used to clean the floor. The second cleaning mechanism (3) is rotatably connected to the main body (1), and the second cleaning mechanism (3) has a first state and a second state. In the first state, the second cleaning mechanism (3) retracts relative to the side of the main body (1). In the second state, the second cleaning mechanism (3) protrudes relative to the side of the main body (1).

## Description

### TECHNICAL FIELD

The present invention relates to the field of household appliance technology, and in particular to a sweeping robot.

### BACKGROUND

A sweeping robot is a common intelligent household appliance that can automatically complete the floor cleaning work in a room.

In the related art, the sweeping robot includes a main body and a cleaning mechanism, and the main body is used to drive the cleaning mechanism to clean the floor.

### SUMMARY

The present invention provides a sweeping robot that can solve the technical problems existing in the related art, and the technical solution of the sweeping robot is as follows.

The present invention provides a sweeping robot, which includes a main body, a first cleaning mechanism and a second cleaning mechanism;
wherein the first cleaning mechanism is connected to the main body and is located below the main body, and the first cleaning mechanism is configured to clean a floor;
the second cleaning mechanism is connected to the main body, and the second cleaning mechanism has a first state and a second state, in the first state, the second cleaning mechanism retracts relative to a side of the main body, and in the second state, the second cleaning mechanism protrudes relative to the side of the main body, and the second cleaning mechanism is configured to clean a wall.

In a possible embodiment, the second cleaning mechanism includes a driving device, a connecting rod and a cleaning component;
one end of the connecting rod is rotatably connected to the main body, and the other end of the connecting rod is connected to the cleaning component;
the driving device is configured to drive the connecting rod to rotate, such that the cleaning component switches between the first state and the second state, wherein in the first state, the cleaning component rotates to a position underneath the main body, and in the second state, the cleaning component rotates to protrude relative to the side of the main body.

In a possible embodiment, the driving device includes a motor, a first push rod and a second push rod;
one end of the first push rod is drivingly connected to the motor, and the other end of the first push rod is rotatably connected to the second push rod;
an end of the second push rod away from the first push rod abuts against the connecting rod;
the motor drives the connecting rod to rotate through the first push rod and the second push rod, when the first push rod and the second push rod are in a folded state, the second cleaning mechanism is in the first state, when the first push rod and the second push rod are in an unfolded state, the second cleaning mechanism is in the second state.

In a possible embodiment, the second push rod includes a first rod body and a second rod body;
one end of the first rod body is rotatably connected to the first push rod, and the other end of the first rod body is connected to the second rod body;
a width D2 of the second rod body is greater than a width D1 of the first rod body.

In a possible embodiment, the driving device includes a motor;
one end of the connecting rod is connected to the motor, and the other end of the connecting rod is connected to the cleaning component, and the motor is configured to drive the connecting rod to rotate.

In a possible embodiment, the connecting rod includes a rod body and a ball;
one end of the rod body is rotatably connected to the main body, and the other end of the rod body is connected to the ball, and the ball is hinged to the cleaning component.

In a possible embodiment, a side wall of the main body has an opening;
in the second state, the connecting rod extends out from the opening.

In a possible embodiment, the sweeping robot further includes a curtain;
wherein the curtain is connected to the side wall of the main body, and when the second cleaning mechanism is in the first state, the curtain is configured to cover the opening.

In a possible embodiment, the curtain is a rubber sheet.

In a possible embodiment, when the second cleaning mechanism is in the first state, the second cleaning mechanism is used to clean the floor.

In a possible embodiment, the second cleaning mechanism includes a driving device and a cleaning component;
the driving device is a push rod component, one end of the driving device is connected to the main body, and the other end of the driving device is connected to the cleaning component, and the driving device is configured to drive the cleaning component to slide along a radial direction of the main body.

The technical solution provided by the present invention includes at least the following beneficial effects:

The present invention provides a sweeping robot, which is provided with a second cleaning mechanism. When the second cleaning mechanism is in the first state, it retracts relative to the side of the main body. In this way, the second cleaning mechanism will not affect the first cleaning mechanism to clean the floor near the wall. When the second cleaning mechanism is in the second state, the second cleaning mechanism protrudes relative to the side of the main body, so that it can clean the wall, thereby increasing the cleaning range of the sweeping robot.

It should be understood that the above general description and the detailed description below are only exemplary and explanatory, and donot limit the present invention.

### BRIEF DESCRIPTION OF THE DRAWINGS

The drawings herein are incorporated into the specification and constitute a part of the specification, showing embodiments consistent with the present invention, and are used to explain the principles of the present invention together with the specification. In the drawings:
FIG. 1 is a schematic diagram of the structure of a sweeping robot shown in an embodiment of the present invention;
FIG. 2 is a schematic diagram of the structure of a sweeping robot shown in an embodiment of the present invention;
FIG. 3 is a schematic diagram of the structure of a sweeping robot shown in an embodiment of the present invention;
FIG. 4 is a schematic diagram of the structure of a sweeping robot shown in an embodiment of the present invention;
FIG. 5 is a schematic diagram of the structure of a second cleaning mechanism shown in an embodiment of the present invention;
FIG. 6 is a schematic diagram of the structure of a second cleaning mechanism shown in an embodiment of the present invention;
FIG. 7 is a schematic diagram of the structure of a second cleaning mechanism shown in an embodiment of the present invention;
FIG. 8 is a schematic diagram of the structure of a second cleaning mechanism shown in an embodiment of the present invention;
FIG. 9 is a schematic diagram of the structure of a second cleaning mechanism shown in an embodiment of the present invention; and
FIG. 10 is a schematic diagram of the structure of a sweeping robot shown in an embodiment of the present invention.

### Reference numerals:

1, main body, 10, opening;
2, first cleaning mechanism;
3, second cleaning mechanism, 31, driving device, 311, motor, 312, first push rod, 313, second push rod, 3131, first rod body, 3132, second rod body, 32, connecting rod, 321, rod body, 322, ball, 33, cleaning component;
4. curtain.

The above figures show the clear embodiments of the present invention, which will be described in more detail later. These figures and text descriptions are not intended to limit the scope of the present invention in any way, but to illustrate the concepts of the present invention to those skilled in the art by referring to specific embodiments.

### DETAILED DESCRIPTION

In order to make the purpose, technical solutions and advantages of the present invention clearer, the implementations of the present invention will be further described in detail in conjunction with the drawings below.

The terms used in the implementations of the present invention are only used to explain the embodiments of the present invention, and are not intended to limit the present invention. Unless otherwise defined, the technical terms or scientific terms used herein should be the common meanings understood by people with general skills in the field to which the present invention belongs. The words "first", "second", "third" and similar words used in the patent application specification and claims of this disclosure do not indicate any order, quantity or importance, but are only used to distinguish different components. Similarly, words such as "a" or "an" do not indicate a quantity limitation, but indicate the existence of at least one. Words such as "including" or "including" and similar words mean that the elements or objects appearing before "including" or "including" include the elements or objects listed after "including" or "including" and their equivalents, and do not exclude other elements or objects. Words such as "connecting" or "connected" are not limited to physical or mechanical connection, but may include electrical connection, whether direct or indirect. "Up", "down", "left", "right", etc. are only used to indicate relative position relationships. When the absolute position of the described object changes, the relative position relationship may also change accordingly.

A sweeping robot is a common smart household appliance that can automatically complete floor cleaning work in a room. In the related art, a sweeping robot includes a main body and a cleaning mechanism, and the main body is used to drive the cleaning mechanism to clean the floor. However, the cleaning range of the current sweeping robot is relatively small, and it is mainly used to clean the floor, but the skirting at the bottom of the wall cannot be effectively cleaned temporarily.

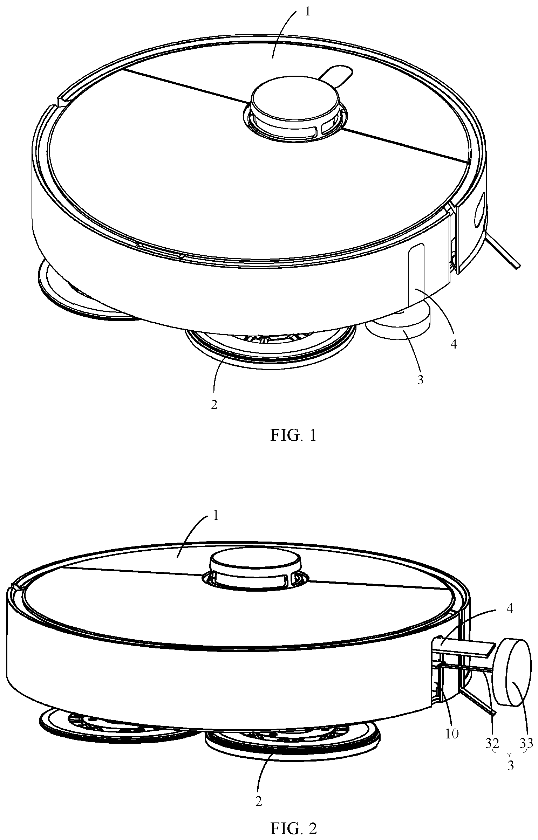

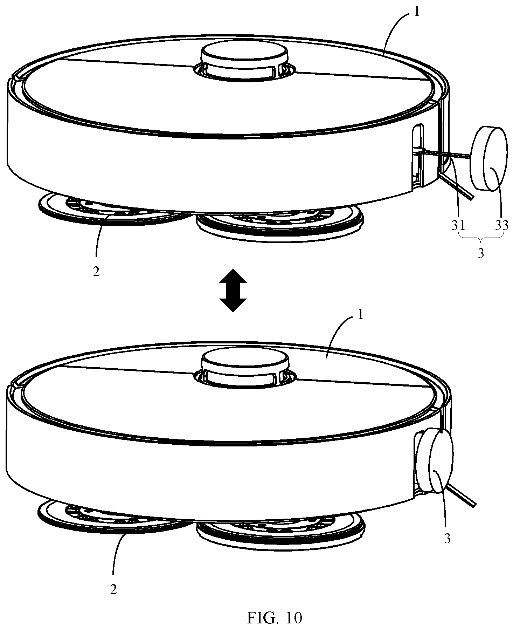

In view of the above technical problems, an embodiment of the present invention provides a sweeping robot, as shown in FIG. 1, the sweeping robot includes a main body 1, a first cleaning mechanism 2 and a second cleaning mechanism 3. The first cleaning mechanism 2 is connected to the main body 1 and is located below the main body 1, and the first cleaning mechanism 2 is used to clean the floor. The second cleaning mechanism 3 is connected to the main body 1, and the second cleaning mechanism 3 has a first state and a second state. As shown in FIG. 1 and FIG. 10, in the first state, the second cleaning mechanism 3 retracts relative to the side of the main body. As shown in FIG. 2, FIG. 3 and FIG. 10, in the second state, the second cleaning mechanism 3 protrudes relative to the side of the main body 1, and the second cleaning mechanism 3 is used to clean the wall.

The main body 1 has an edge sensor and a controller. The main body 1 can judge the distance between the sweeping robot and the wall through the edge sensor, and control the second cleaning mechanism 3 to switch between the first state and the second state through the controller. When the edge sensor measures that the distance between the sweeping robot and the wall is far, the controller controls the second cleaning mechanism 3 to be in the first state, and the sweeping robot is only used to clean the floor. When the edge sensor measures that the distance between the sweeping robot and the wall is close, the controller sends an instruction to the second cleaning mechanism 3, so that the second cleaning mechanism 3 is in the second state, thereby completing the cleaning of the wall.

In the technical solution provided by the embodiment of the present invention, the sweeping robot is provided with a second cleaning mechanism 3. When the second cleaning mechanism 3 is in the first state, the second cleaning mechanism 3 retracts relative to the side of the main body 1, so that the second cleaning mechanism 3 will not affect the first cleaning mechanism 2 to clean the ground near the wall. When the second cleaning mechanism 3 is in the second state, the first cleaning mechanism 2 cleans the ground, and the second cleaning mechanism 3 protrudes relative to the side of the main body 1, so that the wall can be cleaned, which increases the cleaning range of the sweeping robot.

Below, the implementation of the second cleaning mechanism 3 is illustrated.

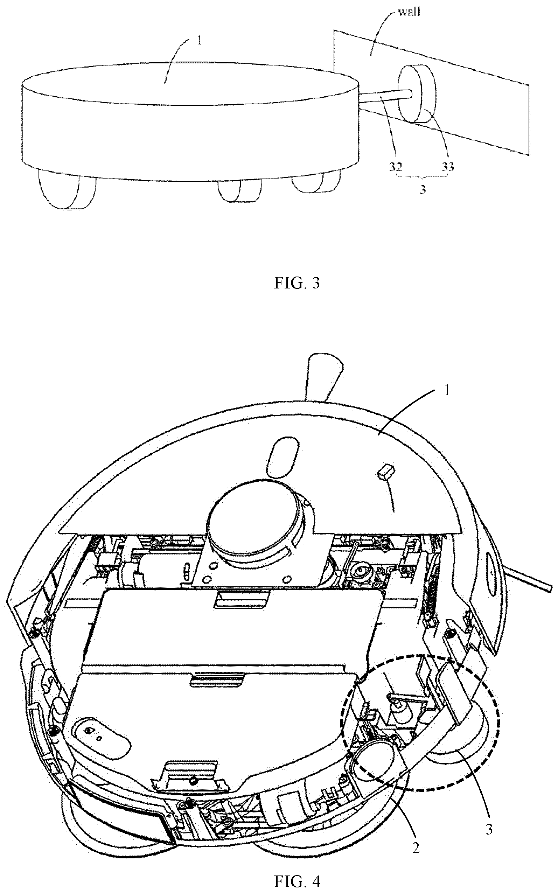

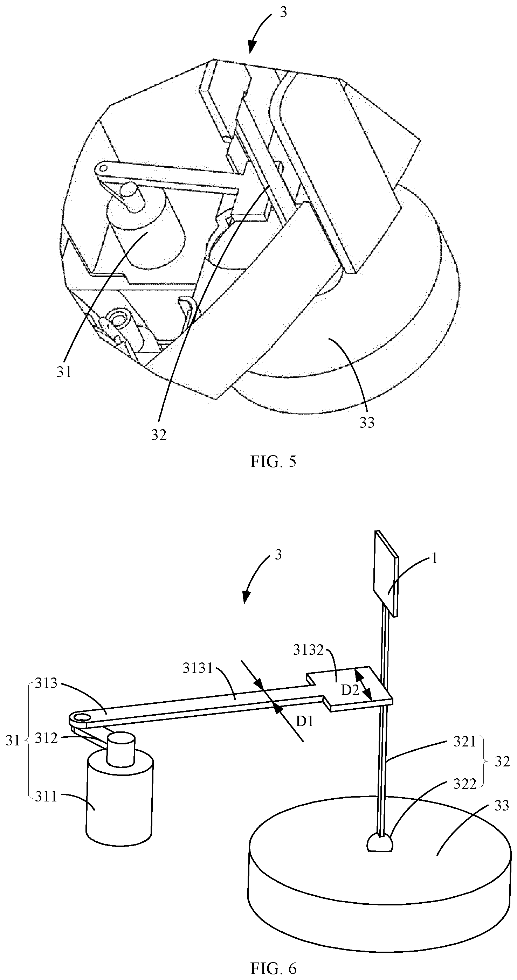

In some examples, as shown in FIG. 4 and FIG. 5, the second cleaning mechanism 3 includes a driving device 31, a connecting rod 32 and a cleaning component 33. One end of the connecting rod 32 is rotatably connected to the main body 1, and the other end thereof is connected to the cleaning component 33. The driving device 31 is used to drive the connecting rod 32 to rotate, so that the cleaning component 33 switches between the first state and the second state. In the first state, the cleaning component 33 rotates to a position underneath the main body 1, and in the second state, the cleaning component 33 rotates to protrude relative to the side of the main body 1. The cleaning component 33 can also be called a cleaning cloth.

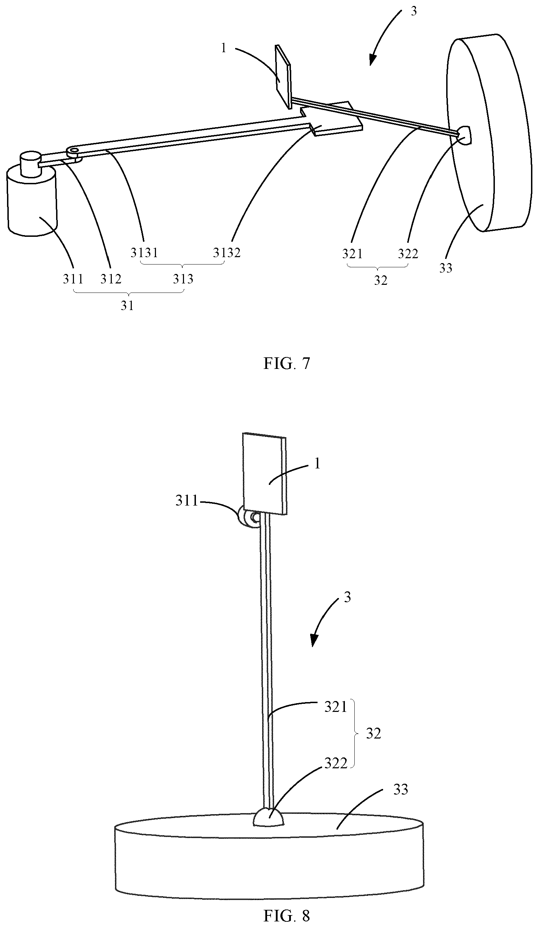

As shown in FIG. 7, when the second cleaning mechanism 3 needs to clean the wall, the driving device 31 drives the connecting rod 32 to rotate, so that the connecting rod 32 drives the cleaning component 33 to rotate to the side of the main body 1. As shown in FIG. 6, after the second cleaning mechanism 3 cleans the wall, the driving device 31 drives the connecting rod 32 to rotate, so that the connecting rod 32 drives the cleaning component 33 to rotate to a position underneath the main body 1.

For example, as shown in FIG. 6 and FIG. 7, the cleaning component 33 can be circular, so as to facilitate cleaning the edge of the wall.

In some examples, as shown in FIG. 6 and FIG. 7, the driving device 31 includes a motor 311, a first push rod 312 and a second push rod 313. One end of the first push rod 312 is drivingly connected to the motor 311, and the other end thereof is rotatably connected to the second push rod 313. The end of the second push rod 313 away from the first push rod 312 abuts against the connecting rod 32. The first push rod 312 and the second push rod 313 form a crank link mechanism. The motor 311 drives the connecting rod 32 to rotate through the first push rod 312 and the second push rod 313. When the first push rod 312 and the second push rod 313 are in a folded state, the second cleaning mechanism 3 is in a first state. When the first push rod 312 and the second push rod 313 are in an unfolded state, the second cleaning mechanism 3 is in a second state. The motor 311 can be a stepping motor.

As shown in FIG. 6, when the first push rod 312 and the second push rod 313 are in a folded state, the axes of the first push rod 312 and the second push rod 313 form a certain angle. At this time, the distance between the motor 311 and the connecting rod 32 is short, so that the connecting rod 32 is stored inside the main body 1, and the cleaning component 33 is located below the main body 1.

As shown in FIG. 7, when the first push rod 312 and the second push rod 313 are in the unfolded state, the angle between the first push rod 312 and the second push rod 313 is 180°. At this time, the distance between the motor 311 and the connecting rod 32 is long, and the first push rod 312 and the second push rod 313 push the connecting rod 32 to rotate to the outside of the main body 1, so that the cleaning component 33 is located at the side of the main body 1.

In some examples, as shown in FIG. 6, the second push rod 313 includes a first rod body 3131 and a second rod body 3132. One end of the first rod body 3131 is rotatably connected to the first push rod 312, and the other end thereof is connected to the second rod body 3132, and the width D2 of the second rod body 3132 is greater than the width D1 of the first rod body 3131. The first rod body 3131 and the second rod body 3132 are in an integrated structure.

When the driving device 31 drives the second cleaning mechanism 3 to switch between the first state and the second state, the second push rod 313 rotates, causing the second rod body 3132 and the connecting rod 32 to slide relative to each other in the width direction of the second rod body 3132. Therefore, setting a large width D2 of the second rod body 3132 can ensure that the second push rod 313 always abuts against the connecting rod 32.

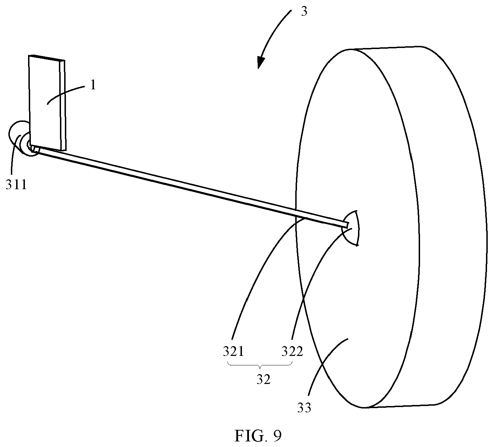

The embodiment of the present invention does not specifically limit the implementation of the driving device 31. In other examples, as shown in FIG. 8 and FIG. 9, the driving device 31 includes a motor 311. One end of the connecting rod 32 is connected to the motor 311, and the other end thereof is connected to the cleaning component 33. The motor 311 is used to drive the connecting rod 32 to rotate. In this way, the motor 311 can directly drive the connecting rod 32, thereby reducing the number of parts in the driving device 31 and simplifying the structure of the driving device 31.

In some examples, as shown in FIG. 6 and FIG. 7, the connecting rod 32 includes a rod body 321 and a ball 322. One end of the rod body 321 is rotatably connected to the main body 1, and the other end thereof is connected to the ball 322, and the ball 322 is hinged to the cleaning component 33. In this way, the cleaning component 33 can be at any angle with the rod body 321, so that the angle of the cleaning component 33 can be changed with the change of the wall. For example, when the wall has an inclined surface, the cleaning component 33 can also be tilted accordingly, so that the cleaning component 33 can always adhere to the wall, thereby ensuring the cleaning effect of the cleaning component 33.

In some examples, as shown in FIG. 2, the side wall of the main body 1 has an opening 10. In the second state, the connecting rod 32 extends out from the opening 10, thereby preventing the side wall of the main body 1 from blocking the connecting rod 32.

In some examples, as shown in FIG. 1 and FIG. 2, the sweeping robot further includes a curtain 4, which is connected to the side wall of the main body 1. As shown in FIG. 1, when the second cleaning mechanism 3 is in the first state, the curtain 4 is used to cover the opening 10, which prevents foreign matter from entering the interior of the main body 1 through the opening 10, thereby damaging the main body 1 and the driving device 31. As shown in FIG. 2, when the second cleaning mechanism 3 is in the second state, the curtain 4 is at a certain angle to the side wall of the main body 1. When the connecting rod 32 rotates toward the outside of the main body 1, the curtain 4 will be lifted up under the push of the connecting rod 32, so that the connecting rod 32 extends out from the opening 10.

In some examples, the curtain 4 is a rubber sheet. As a result, the curtain 4 is soft and easy to be lifted up under the push of the connecting rod 32.

In other examples, the curtain 4 can also be a rigid member, and the curtain 4 is hinged to the side wall of the main body 1, so that the curtain 4 can rotate with the rotation of the connecting rod 32.

In some examples, when the second cleaning mechanism 3 is in the first state, the second cleaning mechanism 3 is used to clean the floor. In this way, the second cleaning mechanism 3 can clean both the wall and the floor, which enhances the cleaning strength of the sweeping robot on the bottom surface.

In the above scheme, the second cleaning mechanism 2 achieves the switching between the first state and the second state through the rotational connection with the main body 1. In other examples, the second cleaning mechanism 2 can also achieve the switching between the first state and the second state through a sliding connection with the main body 1.

As shown in FIG. 10, the second cleaning mechanism 3 includes a driving device 31 and a cleaning component 33. The driving device 31 is a push rod component, one end of the driving device 31 is connected to the main body 1, and the other end thereof is connected to the cleaning component 33. The driving device 31 is used to drive the cleaning component 33 to slide along the radial direction of the main body 1.

In the first state, the driving device 31 drives the cleaning component 33 to slide in the direction close to the main body 1. The cleaning component 33 can extend into the interior of the main body 1 through the opening 10, or it can be located outside the main body 1 and adhere to the outer side wall of the main body 1. In the second state, the driving device 31 drives the cleaning component 33 to slide in the direction away from the main body 1.

In some examples, the driving device 31 may include a motor and a telescopic rod, and the motor drives the cleaning component 33 to switch between the first state and the second state by driving the extension and retraction of the telescopic rod.

In other examples, the driving device 31 may also include a motor, a gear and a push rod. The motor is connected to the gear, the push rod has a sawtooth structure, and the push rod engages with the gear. The motor drives the gear to rotate to make the push rod slide along the radial direction of the main body 1, thereby driving the cleaning component 33 to switch between the first state and the second state.

## Claims

1. A sweeping robot, comprising a main body (1), a first cleaning mechanism (2) and a second cleaning mechanism (3);
wherein the first cleaning mechanism (2) is connected to the main body (1) and is located below the main body (1), and the first cleaning mechanism (2) is configured to clean a floor;
the second cleaning mechanism (3) is connected to the main body (1), and has a first state and a second state, wherein in the first state, the second cleaning mechanism (3) retracts relative to a side of the main body (1), and in the second state, the second cleaning mechanism (3) protrudes relative to the side of the main body (1), and the second cleaning mechanism (3) is configured to clean a wall.

2. The sweeping robot according to claim 1, wherein the second cleaning mechanism (3) comprises a driving device (31), a connecting rod (32) and a cleaning component (33);
wherein a first end of the connecting rod (32) is rotatably connected to the main body (1), and a second end of the connecting rod (32) is connected to the cleaning component (33);
the driving device (31) is configured to drive the connecting rod (32) to rotate, such that the cleaning component (33) switches between the first state and the second state, wherein in the first state, the cleaning component (33) rotates to a position underneath the main body (1), and in the second state, the cleaning component (33) rotates to protrude relative to the side of the main body (1).

3. The sweeping robot according to claim 2, wherein the driving device (31) comprises a motor (311), a first push rod (312) and a second push rod (313);
wherein a first end of the first push rod (312) is drivingly connected to the motor (311), and a second end of the first push rod (312) is rotatably connected to the second push rod (313);
an end of the second push rod (313) away from the first push rod (312) abuts against the connecting rod (32);
the motor (311) drives the connecting rod (32) to rotate through the first push rod (312) and the second push rod (313), when the first push rod (312) and the second push rod (313) are in a folded state, the second cleaning mechanism (3) is in the first state, when the first push rod (312) and the second push rod (313) are in an unfolded state, the second cleaning mechanism (3) is in the second state.

4. The sweeping robot according to claim 3, wherein the second push rod (313) comprises a first rod body (3131) and a second rod body (3132);
wherein a first end of the first rod body (3131) is rotatably connected to the first push rod (312), and a second end of the first rod body (3131) is connected to the second rod body (3132);
a width D2 of the second rod body (3132) is greater than a width (D1) of the first rod body (3131).

5. The sweeping robot according to claim 2, wherein the driving device (31) comprises a motor (311);
wherein the first end of the connecting rod (32) is connected to the motor (311), and the second end of the connecting rod (32) is connected to the cleaning component (33), and the motor (311) is configured to drive the connecting rod (32) to rotate.

6. The sweeping robot according to any one of claims 2 to 5, wherein the connecting rod (32) comprises a rod body (321) and a ball (322);
wherein a first of the rod body (321) is rotatably connected to the main body (1), and a second end of the rod body (321) is connected to the ball (322), and the ball (322) is hinged to the cleaning component (33).

7. The sweeping robot according to any one of claims 2 to 5, wherein a side wall of the main body (1) has an opening (10);
in the second state, the connecting rod (32) extends out from the opening (10).

8. The sweeping robot according to claim 7, further comprising a curtain (4);
wherein the curtain (4) is connected to the side wall of the main body (1), and when the second cleaning mechanism (3) is in the first state, the curtain (4) is configured to cover the opening (10).

9. The sweeping robot according to claim 8, wherein the curtain (4) is a rubber sheet.

10. The sweeping robot according to claim 1, wherein the second cleaning mechanism (3) comprises a driving device (31) and a cleaning component (33);
wherein the driving device (31) is a push rod component, a first end of the driving device (31) is connected to the main body (1), and a second end of the driving device (31) is connected to the cleaning component (33), and the driving device (31) is configured to drive the cleaning component (33) to slide along a radial direction of the main body (1).
